# EUROPEAN PATENT APPLICATION

(11) **EP 1 380 497 A2**
(43) Date of publication of application: **14.01.2004**
(21) Application number: 03015453.8
(22) Date of filing: 09.07.2003
(51) Int. Cl.: B62D 33/06

(54) **Operator's cab for work vehicle**

(30) Priority: 10.07.2002 JP 2002201393
(71) Applicant: KOMATSU LTD., Minato-ku, Tokyo (JP)
(72) Inventor: Tadashi, Mori, Hirakata-shi, Osaka (JP); Koudou, Tsuji, Hirakata-shi, Osaka (JP)
(74) Representative: Viering, Jentschura & Partner

(57) **Abstract**

In a frame of an operator's cab for a work vehicle, support pillars are formed from pipe-like members and the cross sectional area of rear support pillars is made to be larger than that of front support pillars, so that the position where the highest visibility is required differs from other positions in terms of pillar structure, thereby achieving improved visibility without significantly decreasing the overall strength of the frame.

## Description

### Technical Field

The present invention relates to a work vehicle cab capable of affording the operator an improved field of view, which is adapted for use in a construction machine such as a hydraulic excavator, farm machine such as a tractor, and other industrial machines.

### Background Art

There are various types of work vehicles such as construction machines, farm machines and material handling machines. For example, hydraulic excavators, which are a typical example of construction machines, are widely used in civil engineering work involving soil excavation, foundation work, demolition of architectural structure and the like. In such work, the operator operates the work implement, while visually checking forward conditions and surroundings from the operator' s cab through the front and side windows. What is the most important for the work carried out by the operator who is sitting in the operator's cab of a work vehicle, looking out therefrom is that the operator's cab is capable of providing an broad field of view not only through the front window but also through both side faces.

Reinforcement of cab structure has been promoted for work vehicles such as hydraulic excavators, in the light of safety to the operator. One known technique for structural reinforcement of an operator's cab is disclosed in Japanese Patent Publication *KOKAI* Gazette No. 11-166247.

According to Japanese Publication No. 11-166247, pillars constituting a frame are formed from a combination of an inner plate and outer plate which are produced by press molding and a reinforcing plate is inserted into the pillar so as to partition the hollow part inside the pillar so that the strength of the pillar section is effectively increased with the intention of strengthening the operator's cab against the load of overturning, while keeping the conventional configuration of the operator' s cab.

The above prior art technique has, however, not proved successful in that increases in the outside dimension of the pillars and structural complexity are unavoidable, because the measure for reinforcement of the operator' s cab is focused on the cross sectional structure of the pillars. To attain improved visibility, it is structurally possible to lessen the feeling of annoyance caused by the presence of the parts which cut off the field of view during operation by reducing the width of the front pillars located at the front right and front left sides of the operator's cab and side pillars. However, a simple reduction in the width of the pillars makes the operator's cab weak and provides a structure which defeats the purpose of protecting the operator against danger. Therefore, it is considered to be difficult to achieve compatibility between the reinforcement of the pillars and an improvement in visibility.

The present invention has been directed to overcoming the foregoing shortcomings and a primary object of the invention is therefore to provide an operator' s cab for a work vehicle which can afford the operator an improved field of view without significantly degrading the entire strength of the operator's cab, by employing different pillar structures for the position which requires the highest visibility and for other positions.

### Disclosure of the Invention

The above object can be accomplished by an operator's cab for a work vehicle according to the invention, which is constituted by pipe-like members,
wherein, in a frame, the cross sectional area of rear support pillars is larger than that of front support pillars.

According to the invention, the cross sectional area of the front support pillars is made to be smaller than that of the rear support pillars, whereby the cross section strength of the support pillars of the operator's cab can be maintained without significantly declining while the blocked area by the front support pillars which lie in the field of view and block the view when the operator positioned on the operator's seat operates the work implement can be reduced, leading to improved visibility. Use of pipe members as the support pillars has the effect of extending the field of view in addition to its geometrical effect.

Preferably, the dimensional relationship between support pillars constituting the respective sections of the frame is represented, by the front support pillars < an intermediate support pillar < the rear support pillars. Alternatively, the rear support pillars may be larger than the front and intermediate support pillars in cross sectional area. With this arrangement, the front window, which requires the widest field of view, can be made to be large and the window area of the right front half and left front half parts which lead to the front window can be increased, so that the field of view when operation is carried out can be further increased to ensure improved operability. Regarding the ceiling support structure, the frame structure of the operator's cab is reinforced by increasing the cross section strength of the rear support pillars to strengthen the interlink with other members, so that occurrence of troubles can be prevented.

Preferably, in the invention, at least the rear support pillars of the frame are each constituted by a pipe member of modified cross section. With this arrangement, the rigidity of the rear support pillars themselves can be increased, contributing to strengthening of the frame; a curved surface can be easily utilized for attaching an outer panel; and visibility can be increased in the rear window section. Furthermore, not only the rear support pillars but also the front support pillars may be made of members of modified cross section, whereby the opening of the front window can be increased to extend the forward field of view, while maintaining cross section strength to meet the desired condition.

### Brief Description of the Drawings

Figure 1 is a general perspective view of an operator's cab adapted for use in a work vehicle according to one embodiment of the invention.
Figure 2 is a partly cut-away schematic skeletal perspective view of a frame that constitute the operator's cab of the present embodiment.
Figure 3 is a plane cross sectional view diagrammatically showing a layout of support pillars that constitute the construction frame of the operator' s cab.
Figure 4 is a plane cross sectional view diagrammatically showing another embodiment in which support pillars having different cross sectional shapes are used.
Figure 5 is a plane cross sectional view diagrammatically showing still another embodiment in which support pillars having different cross sectional shapes are used.

### Best Mode for Carrying out the Invention

Referring now to the accompanying drawings, the operator' s cab for a work vehicle of the invention will be described according to preferred embodiments.

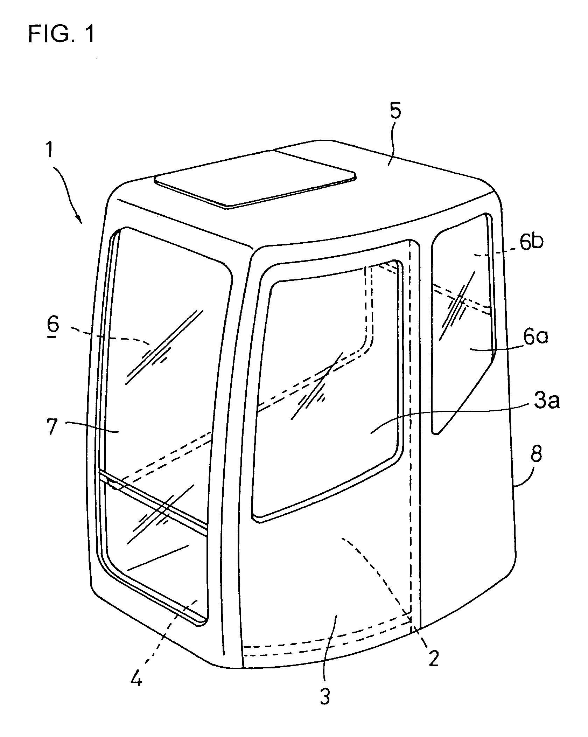

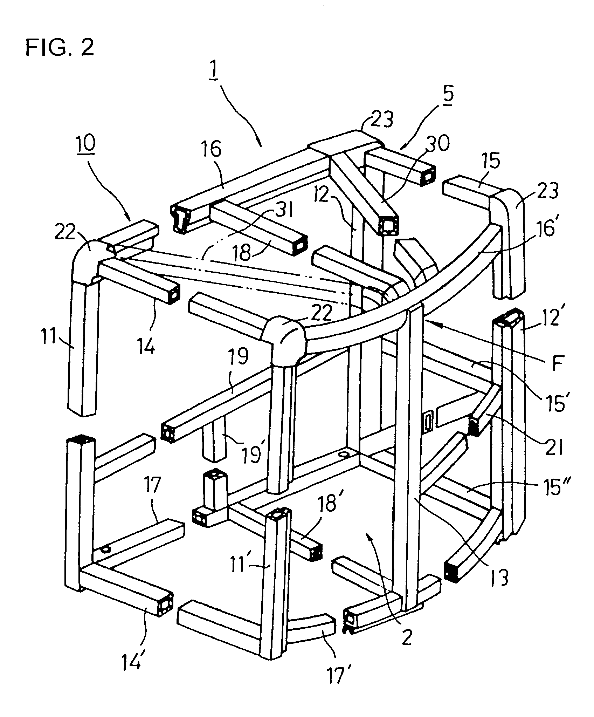

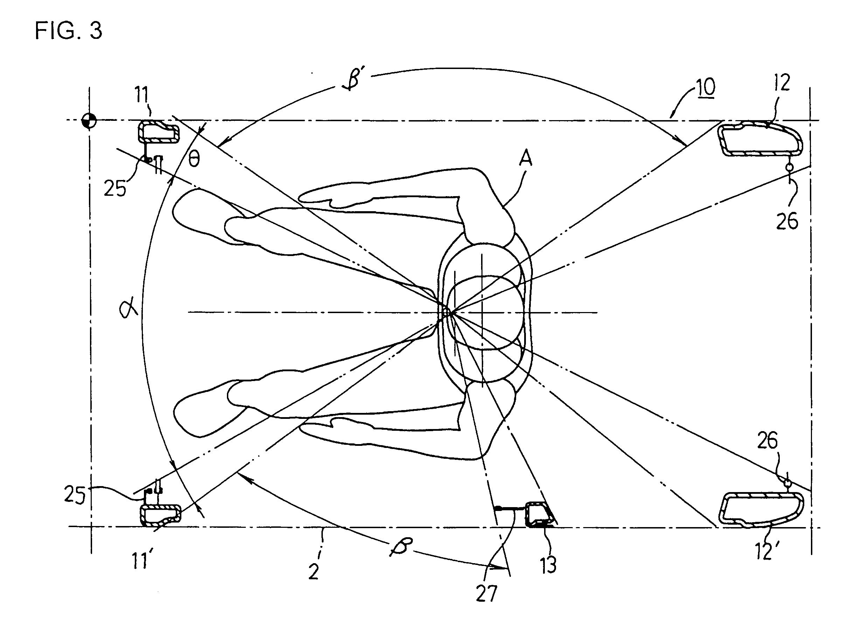

Figure 1 shows a general perspective view of an operator's cab adapted for use in a work vehicle according to one embodiment of the invention. Figure 2 shows a partly cut-away schematic skeletal perspective view of a frame that constitute the operator's cab of the present embodiment. Figure 3 is a plane cross sectional view diagrammatically showing a layout of support pillars that constitute the construction frame of the operator' s cab.

An operator's cab 1 according to the present embodiment is designed to be mounted on the upper structure (not shown) of a hydraulic excavator.

In the operator's cab 1, modified cross section pipes are assembled at the important positions of a frame 10 that constitute the operator's cab 1. The frame 10 is constructed such that front support pillars 11, 11' and rear support pillars 12, 12' are disposed at the four corners and an intermediate support pillar 13 which defines an entrance 2 in cooperation with the front support pillar 11' is disposed at a specified position as a longitudinal member. The direction mentioned herein is based on the orientation of the operator's cab in an installed condition. The front support pillars 11, 11' are connected to each other at their upper and lower ends by transverse members 14, 14', respectively. The rear support pillars 12, 12' are connected to each other at their upper and lower ends and intermediate positions by transverse members 15, 15", 15', respectively. Front and rear face sections are connected to each other at their upper and lower ends by longitudinal members 16, 16', 17, 17' that extend longitudinally, and thus, an outer configuration is formed. The outer side face (located on the right side when viewing from the front position) in which the entrance 2 is positioned is formed in the shape of a convex circular arc face so that a round-type door 3 can be mounted thereto.

In the frame 10 of the operator's cab which defines the outer configuration described above, a transverse connector member 18 is disposed in a ceiling section 5 to connect the intermediate positions of the longitudinal members 16, 16' which extend in the front and rear direction, while a transverse connector member 18' is disposed in a bottom section 4 to connect the intermediate positions of the longitudinal members 17, 17' which extend in the front and rear direction. Disposed on the right side face are a longitudinal member 19 and its supporting member 19' which define a window section 6. On the left side face, the intermediate support pillar 13 and the rear support pillar 12' are connected to each other at their intermediate positions by a connector member 21. A curved joint piece 22 is provided at each joint where the upper end of the front support pillar 11 (11'), the longitudinal member 16 (16') and the transverse member 14 are connected. A curved joint piece 23 is provided at each joint where the upper end of the rear support pillar 12 (12'), the longitudinal member 16 (16') and the transverse member 15 are connected. These joints need to take the form of a curved surface. In the ceiling section 5, there is provided, for the purpose of reinforcement, a diagonal connector member 30 which connects the intermediate position of the outer longitudinal member 16' to the joint or its neighborhood where the inner longitudinal member 16 is connected to the upper end of the rear support pillar 12 (In some cases, there may be additionally provided a diagonal connector member 31 for connecting the intermediate position of the outer longitudinal member 16' to the upper end of the front support pillar 11 or its neighborhood).

In construction of the frame 10 of the operator's cab 1, by using flat, modified cross section pipes for the front support pillars 11, 11' and the rear support pillars 12, 12', the rigidity of these members can be increased. Further, by employing, as the rear support pillars 12, 12', pipe members having a cross section which is elongated in the front and rear direction with their cross sectional area larger than those of other pipes, the rigidity of the entire frame 10 can be increased without marring visibility.

The frame 10 of the operator's cab 1 is integrally formed by welding the respective members at their joints. The outer side face and the ceiling section are respectively provided with a shaped outer panel attached thereto except a front window section 7, the window sections 6, 6a, 6b and the entrance 2. The front window section 7 is provided with an openable front window, whereas the window section 6 on the left side face, the window section 6a on the right side face and the rear window section 6b are respectively provided with a fixed window pane. The entrance 2 is provided with a slide-type door 3. The operator's cab 1 is thus constructed.

In the operator's cab 1 of the above-described structure, the front support pillars 11, 11', the rear support pillars 12, 12' and the intermediate support pillar 13, which constitute the frame 10, are formed by arranging modified cross section pipes in compliance with the lay out condition. More specifically, modified cross section pipes are disposed with their curved surfaces facing outward. In addition, the front support pillars 11, 11' are constituted by pipe members having a smaller cross section than that of the rear support pillars 12, 12'. Preferably, the cross section of the front support pillars 11, 11' is configured to be narrow in a widthwise direction. The front support pillars 11, 11' have, at the inner side faces thereof, their respective retainer members 25 which are symmetrically arranged for holding the slidable front window of the front window section 7, and the rear support pillars 12, 12' also have, at the inner side faces thereof, their respective mounting members 26 for the rear window. Other frame components are of course attached at the desired positions. Additionally, a door frame member 27 for receiving the door is attached to the entrance 2 side of the intermediate support pillar 13.

When the operator A operates the work implement, sitting on the operator's seat (not shown) within the operator's cab 1 of the present embodiment of the above structure, the field of vision that is blocked by the front support pillars 11, 11' and their associated members 25 during operation carried out in front of the operator is less than that of the conventional structure as indicated by chain double-dashed line of Figure 3. Therefore, the forward viewing angle α can be made to be a wide angle. The visible ranges β, β' of the window section 6 and the window 3a of the door 3 at both side faces can be widened, resulting in extension of the field of view at the side faces. Specifically, in the visible region (generally, a range of 120 degrees) when the vehicle is in its normal stationary state (i.e., when operation is carried out with the vehicle stopped), the blocked region θ where the field of vision is blocked by the front support pillars is reduced, so that troubles which would occur during operation can be lessened. It should be noted that, use of pipes of flat cross section for the rear support pillars 12, 12' makes it possible to widen the field of view at the rear window 6b. This is a merit for the operator when he needs to look back while carrying out operation.

Even though the cross section strength of the front support pillars 11, 11' may be lessened, the rigidity of the frame 10 can be maintained, because the rear support pillars 12, 12' have great cross section strength and the components (the longitudinal members 16, 16', the transverse connector member 18, the diagonal connector member 30 etc.) of the ceiling section transmit load to the rear support pillars 12, 12' of great cross section strength.

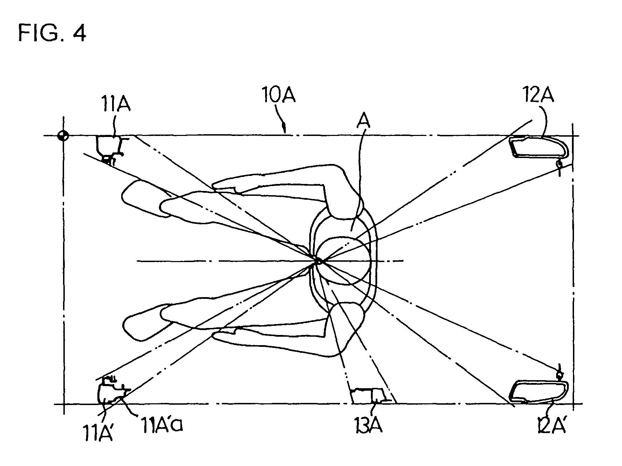

Figure 4 shows a plane cross sectional view diagrammatically illustrating another embodiment in which support pillars having different cross sectional shapes are used.

This embodiment has basically the same structure as that of the foregoing embodiment, except that cross sectional shapes of the front support pillars and the intermediate support pillar differ from the foregoing embodiment. Therefore, in the following description, the parts which are the same as or similar to the parts of the foregoing embodiment will be indicated by the same reference numerals and a detailed explanation of them will be omitted.

According to the present embodiment, at least two pieces formed by bending a thin plate are welded to form a pipe-like member as a front support pillar 11A, (11A'). Such front support pillars 11A, 11A' are symmetrically arranged, each having, at the inner side face thereof, a guide supporting piece on which the front window is slidably mounted. Rear support pillars 12A, 12A' of this embodiment have a flat, modified cross section and great cross section strength, similarly to the foregoing embodiment. It should be noted that, the outer front support pillar 11A' has a stepped door frame member 11A'a like the intermediate support pillar 13A, the stepped door frame member 11A'a being incorporated at the position corresponding to the entrance 2 and receiving the slidable door when it is closed. The intermediate support pillar 13A is also formed by combining two pieces prepared by bending a plate material into a pipe-like member and provided with a stepped door frame member at the side corresponding to the entrance 2.

In a frame 10A of such an operator's cab of the present embodiment, the field of view during operation can be extended to improve operability or workability, by making the cross sectional area of the front support pillars 11A, 11A' smaller than that of the rear support pillars 12A, 12A' similarly to the foregoing embodiment.

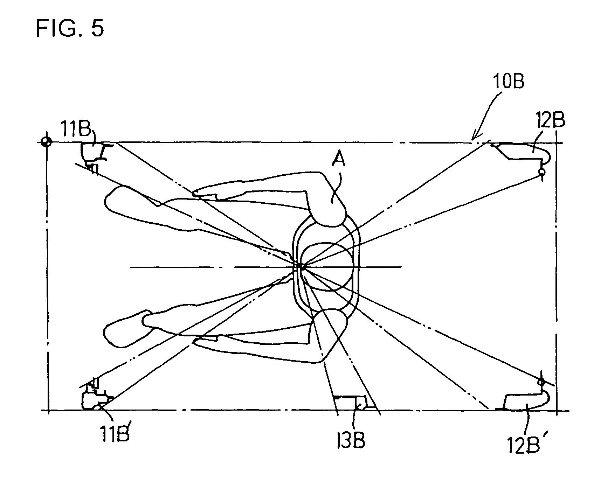

Figure 5 shows a plane cross sectional view diagrammatically illustrating still another embodiment in which support pillars having different cross sectional shapes are used.

An operator's cab according to the present embodiment has a frame 10B the basic structure of which is the same as that of the first embodiment except that each support pillar (i.e., front support pillars 11B, 11B', an intermediate support pillar 13B and rear support pillars 12B, 12B') is formed by integrating two pieces into a pipe-like member of modified cross section, the two pieces being formed by bending of a plate material. Therefore, the present embodiment has the advantage that the cross sectional shape of each support pillar can be so designed as to conform to the shape of the associated outer panel. By employing the front support pillars 11B, 11B' which have smaller cross sectional area than that of the rear support pillars 12B, 12B', the same effect as in the foregoing embodiments can be attained.

Although the cross sectional area of each of the intermediate support pillars 13, 13A, 13B has not been mentioned in the description of the foregoing embodiments, it is desirable that the cross sectional area of the intermediate support pillar be the same as the cross sectional area of the front support pillars 11 (herein, the front support pillars 11 represents the front support pillars of the first to third embodiments for simplicity) or alternatively be larger than the cross sectional area of the front support pillars 11 and smaller than the cross sectional area of the rear support pillars, whereby the visibility for the operator positioned at the operator's seat during operation is improved, the rigidity of the frames 10, 10A, 10B is maintained and a door holding function is provided.

Regarding the rear support pillars 12, 12' (12A, 12A'), increased cross section strength can be achieved by use of pipe members having a curved surface in a part and a modified cross section which is flat and elongated in the front and rear direction as described earlier. In addition, the curved configuration of the outer side faces of the rear support pillars 12, 12' (12A, 12A') exerts a function useful for frame construction when the rear support pillars are mounted.

While the above discussion has been presented in terms of an operator' s cab for a hydraulic excavator, it is obvious that the operator' s cab of the present invention is applicable to other construction machines, farm machine vehicles and materials handling equipment. Where the operator's cab of the invention is applied to such work vehicles, it may be formed into a shape conformable to the shape of the vehicle. These applications are within the technical scope of the invention.

## Claims

1. An operator's cab for a work vehicle, which is constituted by pipe-like members,
wherein, in a frame, the cross sectional area of rear support pillars is larger than that of front support pillars.

2. The operator's cab for a work vehicle according to claim 1, wherein the dimensional relationship between support pillars constituting the respective sections of the frame is represented by the front support pillars < an intermediate support pillar < the rear support pillars.

3. The operator's cab for a work vehicle according to claim 1, wherein the rear support pillars are larger than the front and intermediate support pillars in cross sectional area.

4. The operator's cab for a work vehicle according to any one of claims 1 to 3, wherein at least the rear support pillars of the frame are each constituted by a pipe-like member of modified cross section.
